# DEMANDE DE BREVET EUROPEEN

(11) **EP 4 455 473 A1**
(43) Date de publication de la demande: **30.10.2024**
(21) Numéro de dépôt: 24170263.8
(22) Date de dépôt: 15.04.2024
(51) Int. Cl.: F02K 1/72

(54) **NACELLE D'AÉRONEF ÉQUIPÉE D'AU MOINS UN DISPOSITIF D'INVERSION DE POUSSÉE COMPRENANT AU MOINS UN DÉFLECTEUR LONGITUDINAL, AÉRONEF COMPRENANT AU MOINS UN ENSEMBLE DE PROPULSION COMPORTANT UNE TELLE NACELLE**

(30) Priorité: 26.04.2023 FR 2304193
(71) Demandeur: AIRBUS OPERATIONS (S.A.S.), 31060 Toulouse (FR)
(72) Inventeur: CHELIN, Frédéric, 31060 TOULOUSE (FR); BOURDEAU, Christophe, 31060 TOULOUSE (FR); SCHOLZ, Olivier, 31060 TOULOUSE (FR)
(74) Mandataire: Fantin, Laurent

(57) **Abrégé**

Nacelle d'aéronef équipée d'un dispositif d'inversion de poussée (62) qui comprend :
- au moins un système de déviation configuré pour dévier un flux d'air canalisé dans la nacelle vers une ouverture latérale (64) de la nacelle, à l'état activé,
- au moins un système d'orientation (74) comportant :
o au moins un déflecteur transversal (76) configuré pour orienter le flux d'air dévié par le système de déviation (72) selon des directions radiales et vers l'extrémité amont de la nacelle,
o au moins un déflecteur longitudinal (78) configuré pour orienter le flux d'air dévié par le système de déviation selon au moins une direction qui forme un angle avec une direction radiale.

Le déflecteur longitudinal permet de dévier le flux d'air produit par le dispositif d'inversion de poussée afin qu'il ne perturbe pas le fonctionnement d'une sonde positionnée sur la surface extérieure de la nacelle.

## Description

La présente demande se rapporte à une nacelle d'aéronef équipée d'au moins un dispositif d'inversion de poussée comprenant au moins un déflecteur longitudinal ainsi qu'à un aéronef comprenant au moins un ensemble de propulsion d'aéronef comportant une telle nacelle.

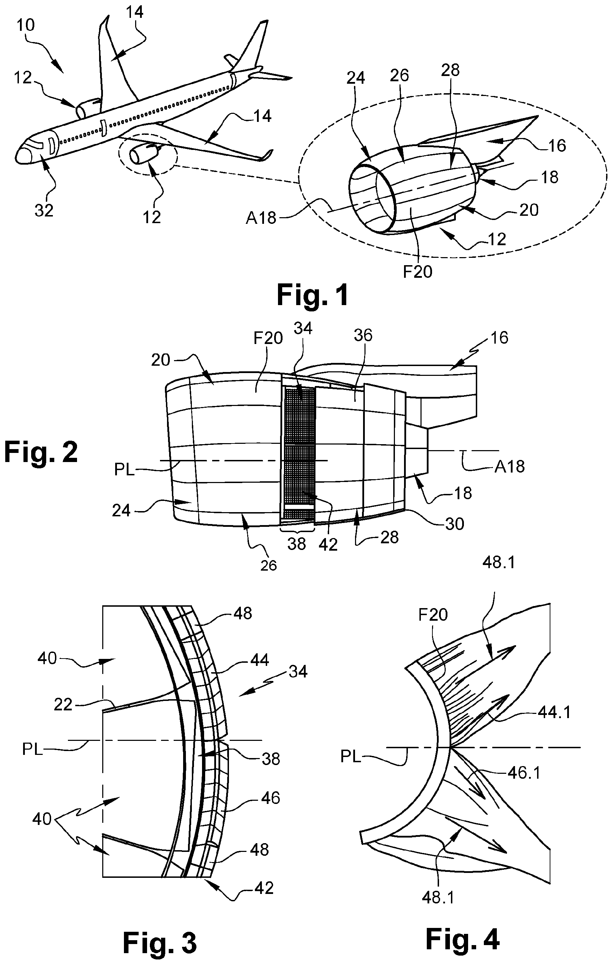

Selon un mode de réalisation visible sur les figures 1 à 3, un aéronef 10 comprend plusieurs ensembles de propulsion 12 positionnés sous chacune des ailes 14 de l'aéronef 10 et reliés à ces dernières par des mâts 16. Chaque ensemble de propulsion 12 comprend une motorisation 18 positionnée à l'intérieur d'une nacelle 20. La motorisation 18 comprend une soufflante qui présente un axe de rotation A18.

Pour la suite de la description, une direction longitudinale est parallèle à l'axe de rotation A18. Un plan longitudinal est un plan contenant l'axe de rotation A18 et un plan transversal est un plan perpendiculaire à l'axe de rotation A18. Les notions avant/amont et arrière/aval font référence au sens d'écoulement d'un flux d'air dans la nacelle 20, ce dernier s'écoulant de l'avant (de l'amont) vers l'arrière (l'aval).

La nacelle 20 a une forme approximativement tubulaire et délimite avec la motorisation 18 un conduit annulaire 22 dans lequel s'écoule un flux d'air secondaire. La nacelle 20 comprend une section amont 24, appelée entrée d'air, une section médiane 26 dans laquelle est positionnée la soufflante de la motorisation 18 et une section aval 28 qui présente un bord de fuite 30. L'aéronef 10 comprend, au niveau de la surface extérieure de son fuselage, au moins une sonde 32, comme une sonde anémométrique par exemple.

La nacelle 20 comprend un dispositif d'inversion de poussée 34 positionné au niveau de la section aval 28 et configuré pour occuper un état activé dans lequel il dévie au moins une partie du flux d'air secondaire circulant dans le conduit annulaire 22 vers l'extérieur et l'amont de la nacelle 20 ainsi qu'un état inactivé dans lequel il ne dévie pas le flux d'air secondaire circulant dans le conduit annulaire 22.

Le dispositif d'inversion de poussée 34 comprend au moins une partie mobile 36 permettant de générer au moins une ouverture latérale 38 (visible sur la figure 2) traversant la nacelle 20. Le dispositif d'inversion de poussée 34 comprend un système de déviation 40 configuré pour occuper une position rétractée, lorsque le dispositif d'inversion de poussée 34 est à l'état inactivé, dans laquelle le système de déviation 40 n'interfère pas avec le flux d'air secondaire ainsi qu'une position déployée (visible sur la figure 3), lorsque le dispositif d'inversion de poussée 34 est à l'état activé, dans laquelle le système de déviation 40 interfère avec le flux d'air secondaire et l'oriente vers l'ouverture latérale 38.

Le dispositif d'inversion de poussée 34 comprend également un système d'orientation 42 configuré pour orienter le flux d'air dévié par le système de déviation 40. Selon un mode de réalisation, le système d'orientation 42 comprend plusieurs grilles d'aubes 44, 46, 48, appelées cascades et positionnées au niveau de chaque ouverture latérale 38, qui comportent chacune des premières parois positionnées dans des plans approximativement longitudinaux ainsi que des deuxièmes parois positionnées dans des plans approximativement transversaux. Les deuxièmes parois présentent une forme d'aube pour dévier vers l'amont le flux d'air sortant via chaque ouverture latérale 38.

Selon un agencement visible sur la figure 3, le système d'orientation 42 comprend, au droit d'une ouverture 38 positionnée en aval d'une sonde 32, des première et deuxième grilles d'aubes 44, 46 positionnées de part et d'autre d'un plan longitudinal PL ainsi que des troisièmes grilles d'aubes 48 positionnées de part et d'autre des première et deuxième grilles d'aubes 44, 46.

Comme illustré sur les figures 3 et 4, chaque troisième grille d'aubes 48 est configurée pour orienter le flux d'air 48.1 la traversant selon une direction radiale et vers l'extrémité amont de la nacelle 20. La première grille d'aubes 44, positionnée au-dessus du plan PL, est configurée pour orienter le flux d'air 44.1 la traversant vers l'extrémité amont de la nacelle 20 et le haut par rapport à une direction radiale. La deuxième grille d'aubes 46, positionnée au-dessous du plan PL, est configurée pour orienter le flux d'air 46.1 la traversant vers l'extrémité amont de la nacelle 20 et le bas par rapport à une direction radiale. Comme illustré sur la figure 4, les première et deuxième grilles d'aubes 44, 46 permettent d'écarter le flux d'air sortant du dispositif d'inversion de poussée 34 afin qu'il n'impacte pas la zone au niveau de laquelle est implantée la sonde 32 pour ne pas perturber son fonctionnement.

Ce mode de réalisation n'est pas satisfaisant car les grilles d'aubes 44, 46, 48 présentent une masse non négligeable.

La présente invention vise à remédier à tout ou partie des inconvénients précités.

A cet effet, l'invention a pour objet une nacelle d'aéronef présentant une surface extérieure s'étendant entre des extrémités amont et aval et configurée pour canaliser un flux d'air s'écoulant selon une direction longitudinale de l'extrémité amont vers l'extrémité aval, la nacelle comportant au moins un dispositif d'inversion de poussée qui comprend :
- au moins une ouverture latérale distante des extrémités amont et aval, traversant la nacelle et délimitée par des bords supérieur et inférieur,
- au moins une partie mobile configurée pour occuper une première position, correspondant à un état inactivé du dispositif d'inversion de poussée, dans laquelle la partie mobile obture l'ouverture latérale ainsi qu'une deuxième position, correspondant à un état activé du dispositif d'inversion de poussée, dans laquelle la partie mobile dégage au moins partiellement l'ouverture latérale,
- au moins un système de déviation configuré pour occuper une position rétractée, lorsque le dispositif d'inversion de poussée est à l'état inactivé, dans laquelle le système de déviation n'interfère pas avec le flux d'air canalisé par la nacelle ainsi qu'une position déployée, lorsque le dispositif d'inversion de poussée est à l'état activé, dans laquelle le système de déviation interfère avec le flux d'air canalisé par la nacelle et l'oriente selon des directions radiales vers l'ouverture latérale,
- au moins un système d'orientation configuré pour orienter le flux d'air dévié par le système de déviation.

Selon l'invention, le système d'orientation comprend :
- au moins un déflecteur transversal positionné approximativement dans un plan perpendiculaire à la direction longitudinale, comportant une première extrémité reliée au bord supérieur de l'ouverture latérale et une deuxième extrémité reliée au bord inférieur de l'ouverture latérale et configuré pour orienter le flux d'air dévié par le système de déviation selon les directions radiales et vers l'extrémité amont de la nacelle,
- au moins un déflecteur longitudinal positionné approximativement dans un plan parallèle à la direction longitudinale et configuré pour orienter le flux d'air dévié par le système de déviation selon au moins une direction qui forme un angle avec une direction radiale.

Selon l'invention, chaque déflecteur transversal présente une grande dimension et s'étend sur toute la hauteur de l'ouverture, ce qui permet de réduire la masse du système d'orientation. Chaque déflecteur longitudinal permet d'orienter le flux d'air dévié par le système de déviation de sorte qu'il n'impacte pas une zone de la surface extérieure de la nacelle au niveau de laquelle est positionnée au moins une sonde. Ainsi, le fonctionnement de la sonde n'est pas perturbé par le dispositif d'inversion de poussée.

Selon une autre caractéristique, chaque déflecteur longitudinal est sécant avec chaque déflecteur transversal.

Selon une autre caractéristique, le système d'orientation comprend un déflecteur longitudinal principal qui présente une section transversale en T ou en V et s'étend entre des première et deuxième extrémités, le déflecteur longitudinal principal étant sensiblement symétrique par rapport à un plan de symétrie longitudinal
Selon un mode de réalisation, le déflecteur longitudinal principal présente une section transversale en T et comprend un pied positionné au niveau du plan de symétrie ainsi qu'une tête positionnée au niveau d'un plan perpendiculaire au plan de symétrie, le pied étant plus proche du système de déviation que la tête.

Selon une autre caractéristique, la tête se présente sous la forme d'une plaque qui comporte deux bords latéraux sensiblement symétriques par rapport au plan de symétrie.

Selon une autre caractéristique, le déflecteur longitudinal principal comprend une partie amont, qui s'étend à partir de la première extrémité, au niveau de laquelle les bords latéraux forment entre eux un angle qui s'évase de la première extrémité vers la deuxième extrémité ainsi qu'une partie aval, qui s'étend de la partie amont jusqu'à la deuxième extrémité, au niveau de laquelle les bords latéraux sont parallèles.

Selon une autre caractéristique, le pied présente un bord longitudinal distant de la tête et sensiblement parallèle à cette dernière ainsi que deux faces latérales reliant le bord longitudinal et la tête, chaque face latérale présentant une courbure concave dans des plans perpendiculaires à la direction longitudinale.

Selon une autre caractéristique, le déflecteur longitudinal principal comprend une partie amont, qui s'étend à partir de la première extrémité, au niveau de laquelle chaque face latérale est séparée du plan de symétrie d'une distance qui augmente de la première extrémité en direction de la deuxième extrémité, ainsi qu'une partie aval, qui s'étend de la partie amont jusqu'à la deuxième extrémité, au niveau de laquelle chaque face latérale est séparée du plan de symétrie d'une distance constante.

Selon un autre mode de réalisation, le déflecteur longitudinal principal présente une section transversale en V et comprend deux ailes, sensiblement symétriques par rapport au plan de symétrie, qui s'étendent chacune entre un bord intérieur et un bord extérieur, les bords intérieurs étant jointifs et plus proches du système de déviation que les bords extérieurs.

Selon une autre caractéristique, le système d'orientation comprend au moins un déflecteur longitudinal secondaire espacé du déflecteur longitudinal principal.

Selon une autre caractéristique, le déflecteur longitudinal principal et chaque déflecteur longitudinal secondaire présentent des bords extérieurs et sont espacés d'une distance telle que dans un plan transversal, une droite passant par l'axe de motorisation et le bord extérieur du déflecteur longitudinal principal forme avec une droite passant par l'axe de motorisation et le bord extérieur du déflecteur longitudinal secondaire un angle compris entre 1 et 40°.

Selon une autre caractéristique, le système d'orientation comprend des déflecteurs longitudinaux secondaires symétriques par rapport au déflecteur longitudinal principal.

Selon une autre caractéristique, chaque déflecteur longitudinal secondaire s'étend entre des extrémités amont et aval et comprend une lame qui s'étend entre les extrémités amont et aval et présente des bords intérieur et extérieur, le bord intérieur étant plus proche du système de déviation que le bord extérieur, la lame présentant dans des plans perpendiculaires à la direction longitudinale une courbure qui tend à écarter les flux d'air du déflecteur longitudinal principal.

Selon une autre caractéristique, le bord intérieur de chaque déflecteur longitudinal secondaire forme un angle supérieur à 0 et inférieur ou égal à 45° avec le plan de symétrie, qui s'évase de l'extrémité amont en direction de l'extrémité aval.

L'invention a également pour objet un aéronef comprenant au moins un ensemble de propulsion comportant une nacelle selon l'une des caractéristiques précédentes.

Selon une autre caractéristique, l'aéronef comprend au moins une sonde positionnée dans une zone, le déflecteur longitudinal étant positionné en aval de la zone dans laquelle est positionnée la sonde.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion illustrant un mode de réalisation,
- La figure 2 est une vue latérale d'un ensemble de propulsion illustrant un mode de réalisation de l'art antérieur,
- La figure 3 est une coupe transversale d'une partie d'un dispositif d'inversion de poussée illustrant un mode de réalisation de l'art antérieur,
- La figure 4 est une représentation schématique du flux d'air sortant du dispositif d'inversion de poussée visible sur la figure 3,
- La figure 5 est une coupe schématique d'un ensemble de propulsion équipé d'un dispositif d'inversion de poussée à l'état inactivé illustrant un mode de réalisation de l'invention,
- La figure 6 est une coupe schématique de l'ensemble de propulsion visible sur la figure 5, le dispositif d'inversion de poussée étant à l'état activé,
- La figure 7 est une vue en perspective d'une partie d'un ensemble de propulsion comportant un dispositif d'inversion de poussée à l'état activé illustrant un mode de réalisation de l'invention,
- La figure 8 est une vue en perspective selon un premier angle de vue d'un déflecteur longitudinal principal illustrant un mode de réalisation de l'invention,
- La figure 9 est une vue en perspective selon un deuxième angle de vue du déflecteur longitudinal principal visible sur la figure 8,
- La figure 10 est une vue latérale d'une partie d'un ensemble de propulsion comportant un dispositif d'inversion de poussée à l'état activé illustrant un autre mode de réalisation de l'invention,
- La figure 11 est une vue en perspective d'une partie d'un dispositif d'inversion de poussée illustrant un autre mode de réalisation de l'invention,
- La figure 12 est une vue en perspective de déflecteurs longitudinaux illustrant un mode de réalisation de l'invention,
- La figure 13 est une vue en perspective d'une partie d'un dispositif d'inversion de poussée illustrant un autre mode de réalisation de l'invention,
- La figure 14 est une vue en perspective d'une partie d'un dispositif d'inversion de poussée illustrant un autre mode de réalisation de l'invention,
- La figure 15 est une coupe transversale schématique d'une partie d'un dispositif d'inversion de poussée illustrant un mode de réalisation de l'invention,
- La figure 16 est une vue en perspective d'une partie d'un dispositif d'inversion de poussée illustrant un autre mode de réalisation de l'invention,
- La figure 17 est coupe transversale du dispositif d'inversion de poussée visible sur la figure 16, et
- La figure 18 est une vue en perspective d'une partie d'un dispositif d'inversion de poussée illustrant un autre mode de réalisation de l'invention.

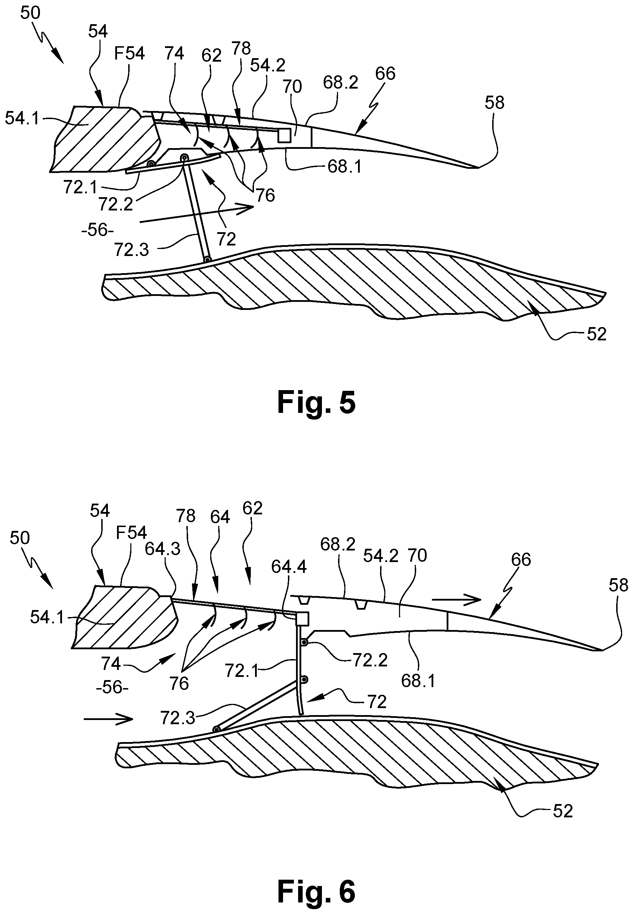

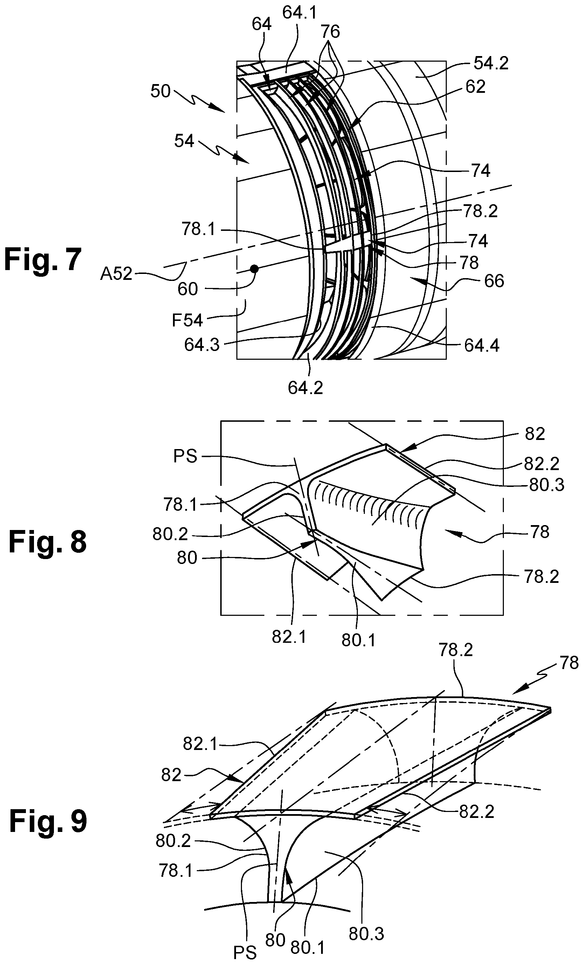

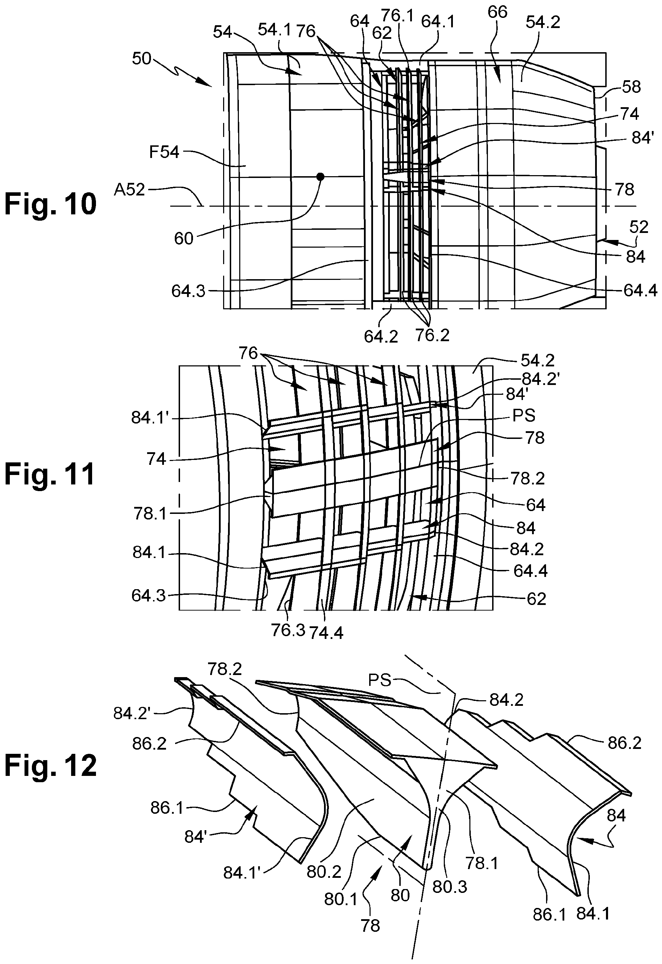

Selon un mode de réalisation visible sur les figures 5 et 6, un ensemble de propulsion 50 comprend une motorisation 52 positionnée à l'intérieur d'une nacelle 54. La motorisation présente un axe de motorisation A52 (visible sur les figures 7 et 10). La nacelle 54 a une forme approximativement tubulaire et délimite avec la motorisation 52 un conduit annulaire 56 dans lequel s'écoule un flux d'air secondaire. La nacelle 54 comprend une partie amont 54.1 et une partie aval 54.2 qui présente un bord de fuite 58. La nacelle 54 présente une surface extérieure F54. Selon un agencement, la nacelle 54 peut comprendre au moins une sonde 60 positionnée au niveau d'une zone de la surface extérieure F54 de la nacelle 54, dans un plan longitudinal de sonde PL.

Selon une application, un aéronef comprend un fuselage, une voilure ainsi qu'au moins un tel ensemble de propulsion relié au fuselage ou à la voilure. Quel que soit le mode de réalisation, la nacelle 54 est tubulaire et s'étend entre des extrémités amont et aval. La nacelle 54 est configurée pour canaliser un flux d'air selon une direction longitudinale, de l'extrémité amont vers l'extrémité aval. Selon un agencement, l'aéronef comprend au moins une sonde 60, comme une sonde anémométrique par exemple, positionnée au niveau de la surface extérieure du fuselage. Quel que soit le mode de réalisation, l'aéronef comprend au moins une sonde 60 positionnée dans une zone.

La nacelle 54 comprend au moins un dispositif d'inversion de poussée 62 positionné au niveau de la partie aval 54.2 et configuré pour occuper un état activé (visible sur la figure 6) dans lequel il dévie au moins une partie du flux d'air secondaire circulant dans le conduit annulaire 56 vers l'extérieur et l'extrémité amont de la nacelle 54 ainsi qu'un état inactivé (visible sur la figure 5) dans lequel il ne dévie pas le flux d'air secondaire circulant dans le conduit annulaire 56.

Le dispositif d'inversion de poussée 62 comprend au moins une ouverture latérale 64, traversant la nacelle 54 et distante des extrémités amont et aval de la nacelle 54, configurée pour faire communiquer le conduit annulaire 56 et l'extérieur de la nacelle 54, notamment sa surface extérieure F54, ainsi qu'au moins une partie mobile 66 configurée pour occuper une première position, correspondant à l'état inactivé du dispositif d'inversion de poussée 62 visible sur la figure 5, dans laquelle la partie mobile 66 obture l'ouverture latérale 64 ainsi qu'une deuxième position, correspondant à l'état activé du dispositif d'inversion de poussée 62 visible sur la figure 6, dans laquelle la partie mobile 66 dégage au moins partiellement l'ouverture latérale 64.

Selon un mode de réalisation, la nacelle 54 comprend deux ouvertures latérales 64 sensiblement symétriques par rapport à un plan longitudinal vertical passant par l'axe de motorisation A52. Chaque ouverture latérale 64 est délimitée par des bords supérieur et inférieur 64.1, 64.2 sensiblement parallèles à la direction longitudinale ainsi que par des bords amont et aval 64.3, 64.4 positionnés dans des plans sensiblement transversaux.

Selon une configuration, la partie aval 54.2 est un capot tubulaire en O mobile, formant la partie mobile 66, qui se translate selon la direction longitudinale entre une position fermée (visible sur la figure 5) dans laquelle la partie aval 54.2 est en contact avec la partie amont 54.1, lorsque le dispositif d'inversion de poussée 62 est à l'état inactivé, et une position ouverte (visible sur la figure 6) dans laquelle la partie aval 54.2 est écartée de la partie amont 54.1 de manière à générer la (ou les) ouverture(s) latérale(s) 64 entre les parties amont et aval 54.1, 54.2 lorsque le dispositif d'inversion de poussée 62 est à l'état activé. La partie aval 54.2 comprend une paroi intérieure 68.1 et une paroi extérieure 68.2 reliées au niveau du bord de fuite 58, les parois intérieure et extérieure 68.1, 68.2 délimitant entre elles une cavité 70 ouverte en direction de la partie amont 54.1.

Bien entendu, l'invention n'est pas limitée à cette configuration pour la partie mobile 66.

Le dispositif d'inversion de poussée 62 comprend au moins un système de déviation 72 configuré pour occuper une position rétractée (visible sur la figure 5), lorsque le dispositif d'inversion de poussée 62 est à l'état inactivé, dans laquelle le système de déviation 72 n'interfère pas avec le flux d'air secondaire canalisé dans le conduit annulaire 56 ainsi qu'une position déployée (visible sur la figure 6), lorsque le dispositif d'inversion de poussée 62 est à l'état activé, dans laquelle le système de déviation 72 est déployé dans le conduit annulaire 56, interfère avec le flux d'air secondaire et l'oriente selon des directions radiales (perpendiculaires à la direction longitudinale) vers l'ouverture latérale 64.

Selon un mode de réalisation, pour chaque ouverture latérale 64, le système de déviation 72 comprend au moins un panneau 72.1 ainsi que, pour chaque panneau 72.1, au moins une articulation 72.2 reliant le panneau 72.1 à la nacelle 54 (notamment à la partie mobile 66) et au moins une biellette 72.3 reliant le panneau 72.1 à la motorisation 52. Bien entendu, l'invention n'est pas limitée à ce mode de réalisation pour le système de déviation 72.

Le dispositif d'inversion de poussée 62 comprend également au moins un système d'orientation 74 configuré pour orienter au moins une partie du flux d'air secondaire dévié par le système de déviation 72 et sortant via l'ouverture latérale 64. Selon un agencement, le système d'orientation 74 est positionné au niveau de l'ouverture latérale 64.

Selon un agencement, le système d'orientation 74 et la cavité 70 sont configurés de sorte qu'à l'état inactivé, le système d'orientation 74 se loge dans la cavité 70.

Selon un mode de réalisation, le système d'orientation 74 comprend au moins un déflecteur transversal 76, positionné approximativement dans un plan transversal, comportant une première extrémité 76.1 reliée au bord supérieur 64.1 et une deuxième extrémité 76.2 reliée au bord inférieur 64.2. Chaque déflecteur transversal 76 présente des bords intérieur et extérieur 76.3, 76.4 courbes, sensiblement en arc de cercle, reliant les première et deuxième extrémités 76.1, 76.2, le bord intérieur 76.3 étant plus proche du système de déviation 72 que le bord extérieur 76.4. Selon une configuration, les bords intérieur et extérieur 76.3, 76.4 présentent des courbures adaptées à celles des parois intérieure et extérieure 68.1, 68.2 de la partie aval 54.2 de la nacelle 54 de manière à ce que le système d'orientation 74 puisse se loger dans la cavité 70 lorsque le dispositif d'inversion de poussée 62 est à l'état inactivé.

Chaque déflecteur transversal 76 est configuré pour orienter, selon les directions radiales et vers l'extrémité amont, le flux d'air dévié par le système de déviation 72 et sortant de l'ouverture latérale 64.

Selon un mode de réalisation, chaque déflecteur transversal 76 comprend une lame, en forme de portion de couronne, qui présente dans des plans longitudinaux une courbure concave (les bords intérieur et extérieur 76.3, 76.4 étant plus proches de l'extrémité amont de la nacelle 54 que le reste du déflecteur transversal 76).

Selon une configuration, chaque déflecteur transversal 76 a une largeur (distance séparant les bords intérieur et extérieur 76.3, 76.4) et une courbure constantes entre ses première et deuxième extrémités 76.1, 76.2. Ainsi, le flux d'air sortant de la nacelle 54 est sensiblement constant sur le pourtour de la nacelle 54. Selon un agencement, les déflecteurs transversaux 76 ont des largeurs différentes qui diminuent du bord amont 64.3 vers le bord aval 64.4.

Le nombre de déflecteurs transversaux 76 et leur forme sont déterminés de manière à obtenir une même fonction aérodynamique que les cascades de l'art antérieur, à savoir un débit suffisant afin d'éviter les problèmes de fonctionnement de la soufflante de la motorisation 52 et une efficacité en matière de contre-poussée.

Pour la suite de la description, on entend par un ou le déflecteur transversal 76 au moins un déflecteur transversal 76 et par un ou le flux d'air au moins un flux d'air.

Selon une caractéristique de l'invention, le système d'orientation 74 comprend au moins un déflecteur longitudinal 78, positionné approximativement dans un plan longitudinal, configuré pour orienter le flux d'air dévié par le système de déviation 72 selon au moins une direction qui forme un angle avec une direction radiale.

Selon un agencement, le déflecteur longitudinal 78 est positionné en aval d'une zone à protéger de la surface extérieure F54 de la nacelle 54 ou du fuselage de l'aéronef, comme la zone où est positionnée la sonde 60. Ainsi, le déflecteur longitudinal 78 est positionné dans un plan longitudinal confondu avec le plan longitudinal de sonde PL ou proche de ce dernier.

Selon un mode de réalisation, le système d'orientation 74 comprend un déflecteur longitudinal principal 78 qui présente une section transversale en T ou en V et s'étend entre des première et deuxième extrémités 78.1, 78.2. Il est sensiblement symétrique par rapport à un plan de symétrie PS longitudinal.

Selon différents modes de réalisation visibles sur les figures 7 à 14, le déflecteur longitudinal principal 78 présente une section transversale en T et comprend un pied 80 positionné au niveau du plan de symétrie PS longitudinal ainsi qu'une tête 82 positionnée au niveau d'un plan perpendiculaire au plan de symétrie PS longitudinal, le pied 80 étant plus proche du système de déviation 72 que la tête 82. Le pied 80 et la tête 82 forment une pièce d'un seul tenant, métallique ou en matériau composite, réalisée par tout moyen approprié.

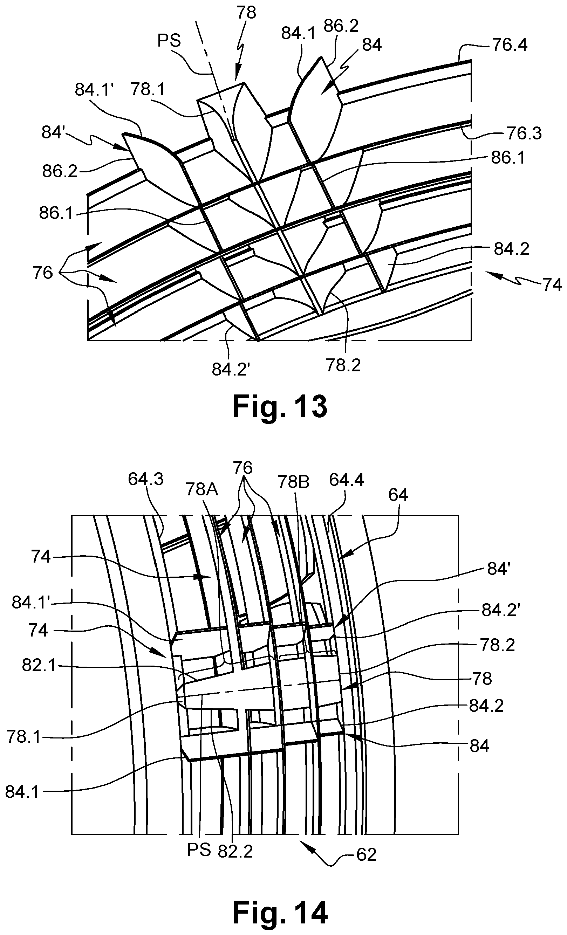

La tête 82 se présente sous la forme d'une plaque qui présente deux bords latéraux 82.1, 82.2 sensiblement symétriques par rapport au plan de symétrie PS longitudinal. Selon une configuration, ces bords latéraux 82.1, 82.2 sont sensiblement parallèles entre eux et au plan de symétrie PS longitudinal. Selon une autre configuration visible sur la figure 9, les bords latéraux 82.1, 82.2 forment entre eux un angle qui s'évase de la première extrémité 78.1 vers la deuxième extrémité 78.2, compris entre 0 et 20°. Selon une autre configuration visible sur la figure 14, le déflecteur longitudinal principal 78 comprend une partie amont 78A, qui s'étend à partir de la première extrémité 78.1, au niveau de laquelle les bords latéraux 82.1, 82.2 forment entre eux un angle qui s'évase de la première extrémité 78.1 vers la deuxième extrémité 78.2 ainsi qu'une partie aval 78B, qui s'étend de la partie amont 78A jusqu'à la deuxième extrémité 78.2, au niveau de laquelle les bords latéraux 82.1, 82.2 sont parallèles.

Le pied 80 présente un bord longitudinal 80.1 distant de la tête 82 et sensiblement parallèle à cette dernière ainsi que deux faces latérales 80.2, 80.3 reliant le bord longitudinal 80.1 et la tête 82. Chaque face latérale 80.2, 80.3 présente une courbure concave dans des plans transversaux.

Les faces latérales 80.2, 80.3 sont symétriques par rapport au plan de symétrie PS longitudinal. Selon une configuration, chaque face latérale 80.2, 80.3 est séparée du plan de symétrie PS longitudinal d'une distance constante entre les première et deuxième extrémités 78.1, 78.2. Selon une autre configuration visible sur la figure 8, chaque face latérale 80.2, 80.3 est séparée du plan de symétrie PS longitudinal d'une distance qui augmente de la première extrémité 78.1 vers la deuxième extrémité 78.2. Selon une autre configuration, le déflecteur longitudinal principal 78 comprend une partie amont 78A, qui s'étend à partir de la première extrémité 78.1, au niveau de laquelle chaque face latérale 80.2, 80.3 est séparée du plan de symétrie PS longitudinal d'une distance qui augmente de la première extrémité 78.1 en direction de la deuxième extrémité 78.2 ainsi qu'une partie aval 78B, qui s'étend de la partie amont 78A jusqu'à la deuxième extrémité 78.2, au niveau de laquelle chaque face latérale 80.2, 80.3 est séparée du plan de symétrie PS longitudinal d'une distance constante.

Selon un agencement, le bord longitudinal 80.1 du pied 80 du déflecteur longitudinal principal 78 est positionné au niveau des bords intérieurs 76.3 des déflecteurs transversaux 76. La tête 82 du déflecteur longitudinal principal 78 est positionnée au niveau des bords extérieurs 76.4 des déflecteurs transversaux 76.

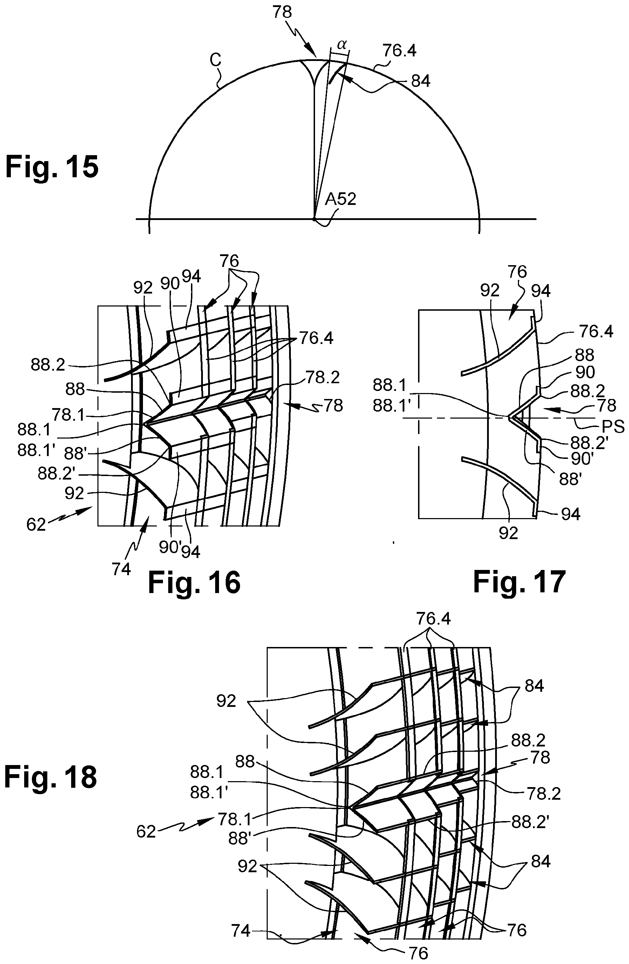

Selon des modes de réalisation visibles sur les figures 16 à 18, le déflecteur longitudinal principal 78 présente une section transversale en V et comprend deux ailes 88, 88', sensiblement symétriques par rapport au plan de symétrie PS, qui s'étendent chacune entre un bord intérieur 88.1, 88.1' et un bord extérieur 88.2, 88.2', les bords intérieurs 88.1, 88.1' étant jointifs et plus proches du système de déviation 72 que les bords extérieurs 88.2, 88.2', ces derniers étant espacés. Selon un mode de réalisation visible sur les figures 16 et 17, chaque aile 88, 88' est prolongée au niveau de son bord extérieur 88.2, 88.2' par une lame 90, 90' positionnée dans une surface courbe contenant les bords extérieurs 76.4 des déflecteurs transversaux 76. Selon un mode de réalisation visible sur la figure 18, le déflecteur longitudinal principal 78 ne comprend aucune lame.

Selon les modes de réalisation visibles sur les figures 16 à 18, les ailes 88, 88' ne sont pas nécessairement planes. Elles peuvent être légèrement courbes entre les bords intérieur et extérieur. Les ailes 88, 88' peuvent former un angle constant entre les première et deuxième extrémités 78.1, 78.2 du déflecteur longitudinal principal 78. En variante, l'angle formé par les ailes 88, 88' peut augmenter progressivement entre les première et deuxième extrémités 78.1, 78.2 ou augmenter progressivement au niveau d'une partie amont du déflecteur longitudinal principal 78 et rester constant au niveau d'une partie aval.

Selon une configuration, le déflecteur longitudinal principal 78 est sécant avec le déflecteur transversal 76. Selon un agencement, les première et deuxième extrémités 78.1, 78.2 sont reliées aux bords amont et aval 64.3, 64.4 délimitant l'ouverture latérale 64 et/ou le déflecteur longitudinal principal 78 est relié au déflecteur transversal 76.

Selon des modes de réalisation visibles sur les figures 10 à 14, le système d'orientation 74 comprend, en plus du déflecteur longitudinal principal 78, au moins un déflecteur longitudinal secondaire 84 et espacé du déflecteur longitudinal principal 78.

Selon une configuration, le système d'orientation 74 comprend deux déflecteurs longitudinaux secondaires 84, 84' symétriques par rapport au déflecteur longitudinal principal 78, plus particulièrement par rapport à son plan de symétrie PS longitudinal, un déflecteur longitudinal secondaire 84, 84' de part et d'autre du déflecteur longitudinal principal 78. Selon une autre configuration visible sur la figure 18, le système d'orientation 74 comprend quatre déflecteurs longitudinaux secondaires 84, 84' symétriques par rapport au déflecteur longitudinal principal 78, deux déflecteurs longitudinaux secondaires 84, 84' de part et d'autre du déflecteur longitudinal principal 78. Chaque déflecteur longitudinal secondaire 84, 84' s'étend entre des extrémités amont et aval 84.1/84.1', 84.2/84.2'.

Chaque déflecteur longitudinal secondaire 84, 84' est sécant avec le déflecteur transversal 76. Selon un agencement, les extrémités amont et aval 84.1/84.1', 84.2/84.2' sont reliées aux bords amont et aval 64.3, 64.4 délimitant l'ouverture latérale 64 et/ou chaque déflecteur longitudinal secondaire 84, 84' est relié au déflecteur transversal 76.

Selon un mode de réalisation, chaque déflecteur longitudinal secondaire 84, 84' comprend une lame qui s'étend entre les extrémités amont et aval 84.1/84.1', 84.2/84.2' et présente des bords intérieur et extérieur 86.1, 86.2, le bord intérieur 86.1 étant plus proche du système de déviation 72 que le bord extérieur 86.2. Chaque lame présente dans des plans transversaux une courbure concave (la lame étant située entre le centre de courbure et le déflecteur longitudinal principal 78), qui tend à écarter le flux d'air du déflecteur longitudinal principal 78, constante entre les extrémités amont et aval 84.1/84.1', 84.2/84.2'. Selon un agencement, le bord intérieur 86.1 de chaque déflecteur longitudinal secondaire 84, 84' est situé au niveau des bords intérieurs 76.3 des déflecteurs transversaux 76 et/ou le bord extérieur 86.1 de chaque déflecteur longitudinal secondaire 84, 84' est situé au niveau des bords extérieurs 76.4 des déflecteurs transversaux 76. Selon un autre mode de réalisation visible sur les figures 16 et 17, chaque déflecteur longitudinal secondaire 84, 84' comprend une lame principale 92, comme précédemment décrite, ainsi qu'une lame secondaire 94, prolongeant la lame principale 92, positionnée dans une surface courbe contenant les bords extérieurs 76.4 des déflecteurs transversaux 76.

Selon une configuration visible sur la figure 13, chaque déflecteur longitudinal secondaire 84, 84' présente une hauteur (distance entre les bords intérieur et extérieur 86.1, 86.2) constante entre les extrémités amont et aval 84.1/84.1', 84.2/84.2'. Selon une autre configuration visible sur les figures 11 et 12, chaque déflecteur longitudinal secondaire 84, 84' présente une hauteur qui diminue, de manière régulière ou par paliers, de l'extrémité amont 84.1/84.1' vers l'extrémité aval 84.2/84.2'.

Selon une configuration visible sur la figure 13, le bord intérieur 86.1 de chaque déflecteur longitudinal secondaire 84, 84' est parallèle au plan de symétrie PS longitudinal. Selon une autre configuration visible sur la figure 14, le bord intérieur 86.1 de chaque déflecteur longitudinal secondaire 84, 84' forme un angle α supérieur à 0 et inférieur ou égal à 45° avec le plan de symétrie PS longitudinal qui s'évase de l'extrémité amont 84.1/84.1' en direction de l'extrémité aval 84.2/84.2'.

Comme illustré sur la figure 15, le déflecteur longitudinal principal 78 présente un bord extérieur (les bords latéraux 82.1, 82.2 ou les bords extérieurs 88.2, 88.2') positionné au niveau d'une surface courbe C (correspondant à la surface courbe contenant les bords extérieurs 76.4 des déflecteurs transversaux 76). En parallèle, chaque déflecteur longitudinal secondaire 84, 84' présente un bord extérieur 86.2 positionné approximativement au niveau de la surface courbe C. Chaque déflecteur longitudinal secondaire 84, 84' est espacé du déflecteur longitudinal principal 78 (ou d'un autre déflecteur longitudinal secondaire) d'une distance telle que dans un plan transversal, une droite passant par l'axe de motorisation A52 et le bord extérieur du déflecteur longitudinal principal 78 (le plus proche du déflecteur longitudinal secondaire 84) forme avec une droite passant par l'axe de motorisation A52 et le bord extérieur du déflecteur longitudinal secondaire 84 (le plus proche du déflecteur principal 78) un angle compris entre 1 et 40°.

Quel que soit le mode de réalisation, le système d'orientation 74 comprend au moins un déflecteur longitudinal 78 configuré pour orienter le flux d'air dévié par le système de déviation 72 selon au moins une direction qui forme un angle avec une direction radiale. Ainsi, même si les déflecteurs transversaux 76 orientent le flux d'air dévié par le système de déviation 72 de manière sensiblement constante sur le pourtour de la nacelle 54, chaque déflecteur longitudinal 78 permet d'orienter le flux d'air dévié par le système de déviation 72 de sorte qu'il n'impacte pas une zone de la surface extérieure F54 de la nacelle 54 sensible, comme celle au niveau de laquelle est positionnée une sonde 60.

## Revendications

1. Nacelle (54) d'aéronef présentant une surface extérieure (F54), s'étendant entre des extrémités amont et aval, configurée pour canaliser un flux d'air s'écoulant selon une direction longitudinale de l'extrémité amont vers l'extrémité aval, la nacelle comportant au moins un dispositif d'inversion de poussée (62) qui comprend :
- au moins une ouverture latérale (64) distante des extrémités amont et aval, traversant la nacelle et délimitée par des bords supérieur et inférieur (64.1, 64.2),
- au moins une partie mobile (66) configurée pour occuper une première position, correspondant à un état inactivé du dispositif d'inversion de poussée, dans laquelle la partie mobile (66) obture l'ouverture latérale (64) ainsi qu'une deuxième position, correspondant à un état activé du dispositif d'inversion de poussée (62), dans laquelle la partie mobile (66) dégage au moins partiellement l'ouverture latérale (64),
- au moins un système de déviation (72) configuré pour occuper une première position, lorsque le dispositif d'inversion de poussée (62) est à l'état inactivé, dans laquelle le système de déviation (72) n'interfère pas avec le flux d'air canalisé dans la nacelle (54) ainsi qu'une deuxième position, lorsque le dispositif d'inversion de poussée (62) est à l'état activé, dans laquelle le système de déviation (72) interfère avec le flux d'air canalisé dans la nacelle (54) et l'oriente selon des directions radiales vers l'ouverture latérale (64),
- au moins un système d'orientation (74) configuré pour orienter le flux d'air dévié par le système de déviation (72),
**caractérisée en ce que** le système d'orientation (74) comprend :
- au moins un déflecteur transversal (76) positionné approximativement dans un plan perpendiculaire à la direction longitudinale, comportant une première extrémité (76.1) reliée au bord supérieur (64.1) de l'ouverture latérale (64) et une deuxième extrémité (76.2) reliée au bord inférieur (64.2) de l'ouverture latérale (64) et configuré pour orienter le flux d'air dévié par le système de déviation (72) selon les directions radiales et vers l'extrémité amont de la nacelle,
- au moins un déflecteur longitudinal (78, 84, 84') positionné approximativement dans un plan parallèle à la direction longitudinale et configuré pour orienter le flux d'air dévié par le système de déviation (72) selon au moins une direction qui forme un angle avec une direction radiale.

2. Nacelle d'aéronef selon la revendication précédente, **caractérisée en ce que** chaque déflecteur longitudinal (78, 84, 84') est sécant avec chaque déflecteur transversal (76).

3. Nacelle d'aéronef selon l'une des revendications précédentes, **caractérisée** le système d'orientation (74) comprend un déflecteur longitudinal principal (78) qui présente une section transversale en T ou en V et s'étend entre des première et deuxième extrémités (78.1, 78.2), le déflecteur longitudinal principal (78) étant sensiblement symétrique par rapport à un plan de symétrie (PS) longitudinal.

4. Nacelle d'aéronef selon la revendication précédente, **caractérisée en ce que** le déflecteur longitudinal principal (78) présente une section transversale en T et comprend un pied (80) positionné au niveau du plan de symétrie (PS) et une tête (82) positionnée au niveau d'un plan perpendiculaire au plan de symétrie (PS), le pied (80) étant plus proche du système de déviation (72) que la tête (82).

5. Nacelle d'aéronef selon la revendication précédente, **caractérisée en ce que** la tête (82) se présente sous la forme d'une plaque qui présente deux bords latéraux (82.1, 82.2) sensiblement symétriques par rapport au plan de symétrie (PS).

6. Nacelle d'aéronef selon la revendication précédente, **caractérisée en ce que** le déflecteur longitudinal principal (78) comprend une partie amont (78A), qui s'étend à partir de la première extrémité (78.1), au niveau de laquelle les bords latéraux (82.1, 82.2) forment entre eux un angle qui s'évase de la première extrémité (78.1) vers la deuxième extrémité (78.2) ainsi qu'une partie aval (78B), qui s'étend de la partie amont (78A) jusqu'à la deuxième extrémité (78.2), au niveau de laquelle les bords latéraux (82.1, 82.2) sont parallèles.

7. Nacelle d'aéronef selon l'une des revendications 4 à 6, **caractérisée en ce que** le pied (80) présente un bord longitudinal (80.1) distant de la tête (82) et sensiblement parallèle à cette dernière ainsi que deux faces latérales (80.2, 80.3) reliant le bord longitudinal (80.1) et la tête (82), chaque face latérale (80.2, 80.3) présentant une courbure concave dans des plans perpendiculaires à la direction longitudinale.

8. Nacelle d'aéronef selon la revendication précédente, **caractérisée en ce que** le déflecteur longitudinal principal (78) comprend une partie amont (78A), qui s'étend à partir de la première extrémité (78.1), au niveau de laquelle chaque face latérale (80.2, 80.3) est séparée du plan de symétrie (PS) d'une distance qui augmente de la première extrémité (78.1) en direction de la deuxième extrémité (78.2) ainsi qu'une partie aval (78B), qui s'étend de la partie amont (78A) jusqu'à la deuxième extrémité (78.2), au niveau de laquelle chaque face latérale (80.2, 80.3) est séparée du plan de symétrie (PS) d'une distance constante.

9. Nacelle d'aéronef selon la revendication 3, **caractérisée en ce que** le déflecteur longitudinal principal (78) présente une section transversale en V et comprend deux ailes (88, 88'), sensiblement symétriques par rapport au plan de symétrie (PS), qui s'étendent chacune entre un bord intérieur (88.1, 88.1') et un bord extérieur (88.2, 88.2'), les bords intérieurs (88.1, 88.1') étant jointifs et plus proches du système de déviation (72) que les bords extérieurs (88.2, 88.2').

10. Nacelle d'aéronef selon l'une des revendications 3 à 9, **caractérisée en ce que** le système d'orientation (74) comprend au moins un déflecteur longitudinal secondaire (84) espacé du déflecteur longitudinal principal (78).

11. Nacelle d'aéronef selon la revendication précédente, **caractérisée en ce que** la nacelle présente un axe de motorisation (A52) et **en ce que** le déflecteur longitudinal principal (78) et chaque déflecteur longitudinal secondaire (84, 84') présentent des bords extérieurs et sont espacés d'une distance telle que dans un plan transversal, une droite passant par l'axe de motorisation (A52) et le bord extérieur du déflecteur longitudinal principal (78) forme avec une droite passant par l'axe de motorisation (A52) et le bord extérieur du déflecteur longitudinal secondaire (84) un angle compris entre 1 et 40°.

12. Nacelle d'aéronef selon l'une des revendications 10 à 11, **caractérisée en ce que** le système d'orientation (74) comprend des déflecteurs longitudinaux secondaires (84, 84') symétriques par rapport au déflecteur longitudinal principal (78).

13. Nacelle d'aéronef selon l'une des revendications 10 à 12, **caractérisée en ce que** chaque déflecteur longitudinal secondaire (84, 84') s'étend entre des extrémités amont et aval (84.1/84.1', 84.2/84.2') et comprend une lame qui s'étend entre les extrémités amont et aval (84.1/84.1', 84.2/84.2') et présente des bords intérieur et extérieur (86.1, 86.2), le bord intérieur (86.1) étant plus proche du système de déviation (72) que le bord extérieur (86.2), la lame présentant dans des plans perpendiculaires à la direction longitudinale une courbure qui tend à écarter les flux d'air du déflecteur longitudinal principal (78).

14. Nacelle d'aéronef selon la revendication précédente, **caractérisée en ce que** le bord intérieur (86.1) de chaque déflecteur longitudinal secondaire (84, 84') forme un angle supérieur à 0 et inférieur ou égal à 45° avec le plan de symétrie (PS), qui s'évase de l'extrémité amont (84.1/84.1') en direction de l'extrémité aval (84.2/84.2').

15. Aéronef comprenant au moins un ensemble de propulsion comportant une nacelle selon l'une des revendications précédentes, **caractérisé en ce que** l'aéronef comprend au moins une sonde (60) positionnée dans une zone et **en ce que** le déflecteur longitudinal (78) est positionné en aval de la zone dans laquelle est positionnée la sonde (60).
